# EUROPÄISCHE PATENTANMELDUNG

(11) **EP 2 191 726 A1**
(43) Veröffentlichungstag der Anmeldung: **02.06.2010**
(21) Anmeldenummer: 09175502.5
(22) Anmeldetag: 10.11.2009
(51) Int. Cl.: A23B 4/005, A23L 1/317, B65D 81/20

(54) **Verfahren zur Herstellung eines verpackten Nahrungsmittelprodukts**

(30) Priorität: 12.11.2008 DE 102008056939
(71) Anmelder: Korte, Markus, 99444 Blankenhain (DE)
(72) Erfinder: Korte, Markus, 99444, Blankenhain (DE)
(74) Vertreter: Rau, Albrecht

(57) **Zusammenfassung**

Die Erfindung betrifft ein Verfahren zur Herstellung eines verpackten Nahrungsmittelprodukts, umfassend die Schritte Herstellen eines Gemenges durch Zerkleinern und Vermischen von Fleisch in einer Gemenge-Herstellungs-Einrichtung, Portionieren des Gemenges zu mindestens einer Gemenge-Portion in einer Portionier-Einrichtung, Erhitzen der mindestens einen Gemenge-Portion in einer ersten Erhitzungs-Einrichtung, Umhüllen der mindestens einen erhitzten Gemenge-Portion durch mindestens eine Verpackung in einer Verpackungs-Station, Verschließen der mindestens einen Verpackung, die die mindestens eine Gemenge-Portion beinhaltet, Erhitzen der mindestens einen, in der mindestens einen Verpackung verpackten Gemenge-Portion in einer zweiten Erhitzungs-Einrichtung, und Kühlen der mindestens einen verpackten Gemenge-Portion.

## Beschreibung

Die Erfindung betrifft ein Verfahren zur Herstellung eines verpackten Nahrungsmittelprodukts. Insbesondere richtet sich die Erfindung auf die Herstellung einer verpackten, verzehrfertigen Frikadelle, die aus gebratenem Hackfleisch besteht. Frikadellen sind regional unter zahlreichen Namen und Namensvarianten bekannt. Im Nordosten des deutschen Sprachraumes ist die Bezeichnung Bulette gebräuchlich. Ansonsten sind noch die Bezeichnungen Klops, Fleischpflanzerl, Fleischküchle oder Fleischlaibchen üblich. Ferner betrifft die Erfindung eine Nahrungsmittel-Verpackung, die insbesondere zur Aufbewahrung einer Frikadelle oder dergleichen vorgesehen ist.

Vorbereitete Gerichte bzw. Fertiggerichte zum Verkauf an Verbraucher sind wohl bekannt. Oftmals ist der Geschmack dieser Fertiggerichte jedoch nicht zufriedenstellend. Die Haltbarkeit dieser Fertiggerichte ist außerdem häufig unbefriedigend. Nur gekühlt ist in der Regel eine längere Aufbewahrung möglich.

Der Erfindung liegt daher die Aufgabe zugrunde, ein Verfahren zur Herstellung eines verpackten Nahrungsmittelprodukts bereitzustellen, das einen äußerst ansprechenden Geschmack hat. Ferner soll die Haltbarkeit des verpackten Nahrungsmittelprodukts äußerst lang sein. Analog soll eine Nahrungsmittel-Verpackung geschaffen werden, die eine äußerst lange Haltbarkeit des verpackten Nahrungsmittelprodukts sicherstellt. Andererseits soll der Geschmack des Nahrungsmittelprodukts über die Dauer der Aufbewahrung nicht beeinträchtigt werden.

Diese Aufgaben werden erfindungsgemäß durch die in den Ansprüchen 1 und 9 angegebenen Merkmale gelöst.

Weitere vorteilhafte Ausgestaltungen der Erfindung sind in den Unteransprüchen angegeben.

Nachfolgend werden unter Bezugnahme auf die beigefügte Zeichnung bevorzugte Ausführungsformen der Erfindung beispielhaft beschrieben. Dabei zeigen:
- Fig. 1: eine vereinfachte Schnittdarstellung eines unteren Folienkörpers und einer oberen Folie einer erfindungsgemäßen Verpackung gemäß einer ersten Ausführungsform,
- Fig. 2: eine vereinfachte Schnittdarstellung einer erfindungsgemäßen Verpackung gemäß einer ersten Ausführungsform, die durch die in Fig. 1 dargestellte Folie und den Folienkörper gebildet ist,
- Fig. 3: eine vereinfachte Schnittdarstellung eines oberen und eines unteren Folienkörpers einer erfindungsgemäßen Verpackung gemäß einer zweiten Ausführungsform, und
- Fig. 4: eine vereinfachte Schnittdarstellung einer erfindungsgemäßen Verpackung gemäß einer zweiten Ausführungsform, die durch die in Fig. 3 dargestellten Folienkörper gebildet ist.

Eine Verpackung ist durch zwei separate Folien gebildet. Die beiden Folien bestehen jeweils aus mehreren Schichten und sind in ihrem Aufbau identisch. Sie sind Verbundfolien, die zur Aufbewahrung von Lebensmitteln geeignet sind. Die Folien können flexibel sein, sodass eine im Wesentlichen beutelartige, nachgiebige Verpackung vorliegt. Sie können aber auch eine gewisse Biegesteifigkeit besitzen und zu formstabilen Formkörpern bzw. Folienkörpern vorgeformt sein, sodass auch die Verpackung eine gewisse Biegesteifigkeit hat. Für die spezielle Formgebung ist bei der Herstellung keine Kühlung bzw. Abkühlung erforderlich.

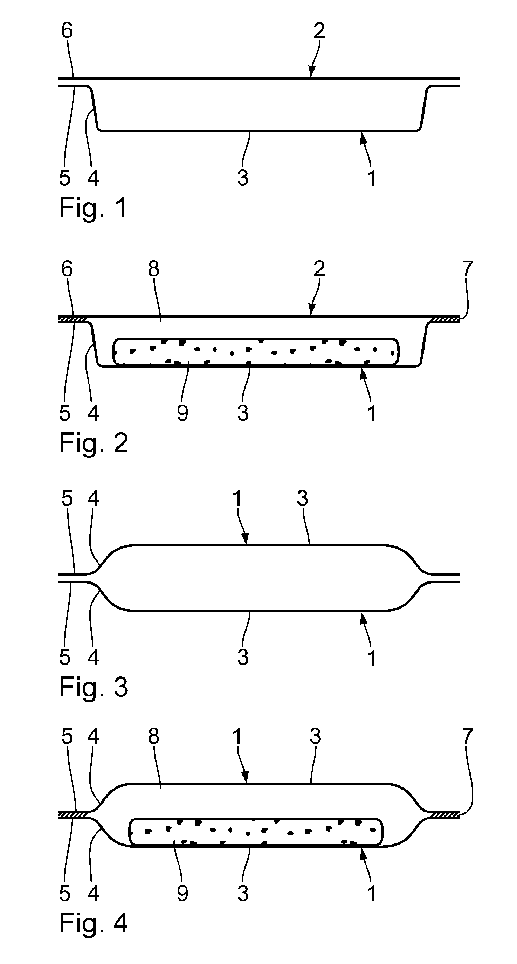

Bezug nehmend auf die Fig. 1 und 2 umfasst eine Verpackung eine Folie und einen Folienkörper. Dem unteren Folienkörper ist das Bezugszeichen 1 zugeordnet, während die obere Folie das Bezugszeichen 2 hat.

Die flexible Folie 2, die ungeformt bzw. nicht vorgeformt ist, verläuft gemäß den Figuren 1 und 2 im Wesentlichen in einer Ebene. Der Folienkörper 1 ist dagegen topfähnlich bzw. schalenartig aus einer ebenen Folie vorgeformt. Er weist einen im Wesentlichen in einer Ebene verlaufenden Bodenabschnitt 3 auf, an den sich randseitig ein vollständig umlaufender Wandabschnitt 4 anschließt. Mit dem Wandabschnitt 4 ist ein komplett umlaufender, äußerer Verbindungsabschnitt 5 direkt verbunden, der sich im Wesentlichen parallel zu dem Bodenabschnitt 3 erstreckt. Der Wandabschnitt 4 verläuft schräg oder senkrecht zu dem Bodenabschnitt 3, so dass die Ebene, in der der Bodenabschnitt 3 verläuft, beabstandet zu der Ebene ist, in der sich der Verbindungsabschnitt 5 befindet.

Der freie Verbindungsabschnitt 5 ist gasdicht mit einem entsprechenden äußeren Verbindungsabschnitt 6 der Folie 2 linienartig verbunden. Die Verbindung erfolgt vorzugsweise über eine vollständig umlaufende, hitzebeständige Siegelnaht 7. Der Bodenabschnitt 3 verläuft dabei beabstandet und parallel zu der Folie 2, so dass durch den Folienkörper 1 und die Folie 2 ein gasdichter Aufbewahrungs-Raum 8 für ein Nahrungsmittelprodukt 9 begrenzt wird. Der Aufbewahrungs-Raum 8 wird nach unten durch den Bodenabschnitt 3, nach oben durch die als Deckel wirkende Folie 2 und seitlich durch den Wandabschnitt 4 begrenzt. Der Bodenabschnitt 3 und/oder der Wandabschnitt 4 können flächig an dem Nahrungsmittelprodukt 9 anliegen.

Der Folienkörper 1 und die Folie 2 weisen jeweils eine rechteckige Grundform auf. Die Länge derselben liegt zwischen 12 cm und 20 cm, während deren Breite zwischen 6 cm und 16 cm liegt. Die Höhe des Wandabschnittes 4 liegt zwischen 0,5 cm und 3 cm. Andere Formen, wie rund oder oval, sind auch möglich.

Der Folienkörper 1 und die Folie 2 weisen jeweils eine äußere, dem Nahrungsmittelprodukt 9 abgewandte Schicht aus gerecktem Polyester und eine innere, dem Nahrungsmittelprodukt 9 zugewandte Siegelschicht auf, die vorzugsweise aus Polypropylen gebildet ist. Zwischen der äußeren Schicht aus gerecktem Polyester und der inneren Siegelschicht befindet sich eine Barriereschicht, die aus speziellem, doppelt geglühtem Aluminium besteht. Die Barriereschicht ist daher kaltverformbar. Durch die Barriereschicht wird eine vollständige Sauerstoffundurchlässigkeit und Lichtundurchlässigkeit erzielt. Die Barriereschicht verhindert also eine Diffusion von Sauerstoff durch den Folienkörper 1 bzw. die Folie 2. Die Siegelschichten des Folienkörpers 1 und der Folie 2 sind einander zugewandt, so dass durch diese bei der verschlossenen Verpackung die feste hitzebeständige Siegel-Verbindung zwischen dem Folienkörper 1 und der Folie 2 über die Verbindungsabschnitte 5, 6 erfolgt. Das Siegeln erfolgt vorzugsweise bei einer Temperatur zwischen 130 °C und 220 °C. Die Festigkeit der Siegelnaht 7 liegt nach DIN 55529 bei mehr als 10 N/15 mm bei einem Siegeldruck von 50 N/cm², einer Siegeltemperatur von 130 °C und einer Siegelzeit von 0,5 s.

Der Folienkörper 1 und die Folie 2 weisen eine Temperaturbeständigkeit zwischen -60 °C und 130 °C auf, wobei deren Dicke jeweils zwischen 80 µm und 120 µm liegt. Sie weisen jeweils eine Wasserdampfdurchlässigkeit von kleiner 0,04 g/m²·d bei einer Temperatur von 23 °C und einer relativen Feuchte von 85 % und eine Sauerstoffdurchlässigkeit von kleiner 0,07 cm³/m²·d bei 1 bar Druck, einer Temperatur von 23 °C und einer relativen Feuchte von 0 % auf, wobei "d" für Tag steht.

In dem Aufbewahrungs-Raum 8 liegt eine Inertgas-Atmosphäre vor. Vorzugsweise wird Stickstoff und/oder Kohlendioxid als Inertgas verwendet.

Bei dem Nahrungsmittelprodukt 9 handelt es sich um eine flache, scheibenartige Frikadelle, die verzehrfertig ist.

Gemäß einer alternativen, nicht dargestellten Ausführungsform erstreckt sich die ebene Folie 2 unten, während der Folienkörper 1 oben vorgesehen ist. Verglichen mit der unter Bezugnahme auf die Fig. 1 und 2 beschriebenen Ausführungsform ist hier die Anordnung des Folienkörpers 1 und der Folie 2 um 180 Grad gedreht.

Nachfolgend wird ein Verfahren zur Herstellung eines verpackten, verzehrfertigen Nahrungsmittelprodukts 9 beschrieben. Zunächst wird knochenloses Fleisch in einem Wolf oder Menger zerkleinert und vermengt. Vorzugsweise besteht das Fleisch aus ²/₃ Schweinefleisch und ⅓ Rindfleisch. Andere Mischungsverhältnisse sind möglich. Außerdem kann auch Lammfleisch, Geflügelfleisch oder dergleichen verwendet werden. In dem Wolf wird somit ein Gemenge erzeugt, so dass der Wolf als Gemenge-Herstellungs-Einrichtung dient. Dem Gemenge können dann unter anderem trockene Brötchen bzw. Semmelbrösel, Trinkwasser, Vollei, gehackte Petersilie, Schnittlauch und Gewürze, wie Pfeffer, Majoran oder Muskat, Frischzwiebelextrakt, hinzugefügt werden. Dies wird dann alles in das Gemenge eingeknetet.

Anschließend wird das Gemenge in einer Portionier-Einrichtung in Portionsgrößen zwischen 70 g und 110 g portioniert, so dass eine Vielzahl separater Gemenge-Portionen geschaffen wird.

Die separierten Gemenge-Portionen werden dann durch eine erste Erhitzungs-Einrichtung auf einem Förderband gefördert. In der Erhitzungs-Einrichtung herrscht eine Temperatur zwischen 200 °C und 300 °C. Die Gemenge-Portionen befinden sich zwischen 150 s und 250 s, vorzugsweise etwa 200 s, in der Erhitzungs-Einrichtung und werden dort kurz von allen Seiten angebraten.

Die angebratenen Gemenge-Portionen werden dann in einer entsprechenden Kühl-Einrichtung abgekühlt und anschließend in eine Verpackungs-Station gebracht. Dort wird eine angebratene Gemenge-Portion in den unteren, schalenartigen Folienkörper 1 gelegt. Die Folie 2 wird entsprechend auf den unteren Folienkörper 1 unter Bildung des Aufbewahrungs-Raumes 8 und Einschluss der angebratenen Gemenge-Portion aufgesetzt.

Der untere Folienkörper 1 ist dabei unmittelbar bzw. direkt vor dem Einbringen der angebratenen Gemenge-Portion in denselben durch Kaltverformung aus einer entsprechenden, ebenen Folie hergestellt worden. Hierzu wurde zur Formgebung Druck auf die ebene Folie aufgebracht. Aufgrund der doppelt geglühten Aluminiumschicht ist der hergestellte Folienkörper 1 formstabil. Bei dem Verfahren werden somit keine Folienkörper 1 herangezogen, die bereits lange vor ihrem Einsatz vorgefertigt worden sind. Die Folienkörper 1 werden erst während des Verfahrens in ihre Form beziehungsweise Gestalt gebracht, sodass die Folienkörper 1 keine Verschmutzungen beziehungsweise Kontaminierungen aufweisen können. Außerdem kann somit auf ein kostenaufwändiges Lagern sperriger Folienkörper 1 verzichtet werden. Vorzugsweise wird der jeweilige Folienkörper 1 erst zeitlich nach dem Erhitzen bzw. Anbraten der zugehörigen Gemenge-Portion in der ersten Erhitzungs-Einrichtung in einer Formgebungs-Einrichtung hergestellt. Bevorzugter wird der jeweilige Folienkörper 1 erst zeitlich nach dem Abkühlen der betreffenden Gemenge-Portion in der Kühl-Einrichtung in einer Formgebungs-Einrichtung hergestellt. Wie erwähnt, wird der jeweilige Folienkörper 1 knapp zeitlich vor dem Einbringen der zugehörigen Gemenge-Portion in einer Formgebungs-Einrichtung hergestellt. Die Formgebungs-Einrichtung ist somit stromabwärts der ersten Erhitzungs-Einrichtung bzw. der Kühl-Einrichtung und stromaufwärts der Verpackungs-Station angeordnet.

Der Aufbewahrungs-Raum 8, in dem sich die angebratene Gemenge-Portion befindet, wird dann in einer Evakuier-Einrichtung evakuiert. Nach der Evakuierung wird etwas Stickstoff in den Aufbewahrungs-Raum 8 als Inertgas eingeführt. Durch die Einführung des Stickstoffes wird der ansonsten in dem Aufbewahrungs-Raum 8 vorhandene Sauerstoff verdrängt, wodurch die Haltbarkeit des verpackten Nahrungsmittelprodukts 9 erhöht wird.

Danach werden der Folienkörper 1 und die Folie 2 durch die umlaufende Siegelnaht 7 über die äußeren Verbindungsabschnitte 5, 6 in einer Verschluss- bzw. Siegel-Einrichtung miteinander versiegelt, so dass der Aufbewahrungs-Raum 8, in dem sich das angebratene Nahrungsmittelprodukt 9 befindet, gasdicht verschlossen ist.

Die Verpackung, die verschlossen ist und das Nahrungsmittelprodukt 9 enthält, wird dann außen mit dem Herstellungsdatum und der Chargennummer versehen. Hierfür ist eine entsprechende Kennzeichnungs-Einrichtung vorgesehen.

Anschließend wird die Verpackung in einen Autoklav eingeführt, in dem eine zur Konservierung der Gemenge-Portion geeignete Temperatur herrscht. Es liegt eine Temperatur von über 100 °C dort vor. Der Autoklav bildet somit eine zweite Erhitzungs-Einrichtung. In dem Autoklav kann ein Überdruck und/oder ein Unterdruck vorliegen. Insgesamt wird die in der Verpackung eingeschlossene, bereits angebratene Gemenge-Portion mehrere Stunden in dem Autoklav bei einem F-Wert (Haltezeit) größer 2 gegart.

Anschließend wird die gegarte, verpackte Gemenge-Portion auf Raumtemperatur abgekühlt und in einem Karton verpackt.

Vorzugsweise werden die angegebenen Schritte, wie Herstellen und Portionieren des Gemenges, Erhitzen und Abkühlen der Gemenge-Portionen, Herstellen von Folienkörpern 1, Verpacken der Gemenge-Portionen mit den Folienkörpern 1, in einer gemeinsamen Anlage durchgeführt. Insbesondere werden auch der Folienkörper 1 und die Folie 1 in der Anlage versiegelt.

Durch die spezielle Ausgestaltung der Verpackung und die Erhitzung der Gemenge-Portion wird eine Mindesthaltbarkeit ohne Kühlung von fünf Monaten erzielt. Konservierungsstoffe bzw. Aromen sind nicht erforderlich.

Bezug nehmend auf die Fig. 3 und 4 wird eine zweite Ausführungsform der Erfindung beschrieben. Im Gegensatz zu der ersten Ausführungsform sind hier zwei vorgeformte Folienkörper 1 vorgesehen. Sie sind sowohl in ihrer Form als auch in ihrem Aufbau identisch. Jeder Folienkörper 1 ist somit topfartig ausgebildet und weist einen Wandabschnitt 4 und einen Boden- bzw. Deckenabschnitt 3 auf. Die Verbindung erfolgt über die Verbindungsabschnitte 5. Ansonsten entspricht die zweite Ausführungsform der ersten Ausführungsform, auf die hiermit verwiesen wird. Insbesondere werden auch hier die beiden Folienkörper 1 erst unmittelbar bzw. direkt vor dem Einbringen der angebratenen Gemenge-Portion in den beziehungsweise die Folienkörper 1 durch Verformung einer entsprechenden Ausgangs-Folie hergestellt.

Gemäß einer weiteren Ausführungsform sind zwei flexible Folien 2 vorgesehen, die die Verpackung bilden. Sie sind nicht vorgeformt und weisen nur eine geringe Biegesteifigkeit auf. Alternativ ist genau eine flexible Folie 2 vorgesehen, die das Nahrungsmittelprodukt 9 alleine umgibt und als Verpackung dient. Sie weist eine Faltstelle auf und ist ansonsten randseitig versiegelt. Eine derartige Verpackung ist auch flexibel und nachgiebig. Sie ist somit beutelartig. Die mindestens eine Folie 2 bleibt auch im Wesentlichen unverformt. Sie wird also nicht zu einem Formkörper verformt.

Alternativ sind mehrere Nahrungsmittelprodukte 9 in genau einer Verpackung eingeschlossen.

## Patentansprüche

1. Verfahren zur Herstellung eines verpackten Nahrungsmittelprodukts, umfassend die Schritte
a) Herstellen eines Gemenges durch Zerkleinern und Vermischen von Fleisch in einer Gemenge-Herstellungs-Einrichtung,
b) Portionieren des Gemenges zu mindestens einer Gemenge-Portion in einer Portionier-Einrichtung,
c) Erhitzen der mindestens einen Gemenge-Portion in einer ersten Erhitzungs-Einrichtung,
d) Umhüllen der mindestens einen erhitzten Gemenge-Portion durch mindestens eine Verpackung in einer Verpackungs-Station,
e) Verschließen der mindestens einen Verpackung, die die mindestens eine Gemenge-Portion beinhaltet,
f) Erhitzen der der mindestens einen, in der mindestens einen Verpackung verpackten Gemenge-Portion in einer zweiten Erhitzungs-Einrichtung, und
g) Kühlen der mindestens einen verpackten Gemenge-Portion.

2. Verfahren nach Anspruch 1, **dadurch gekennzeichnet, dass** nach dem Schritt d) die mindestens eine Verpackung durch eine Evakuier-Einrichtung evakuiert wird, wobei vorzugsweise nach dem Evakuieren der Verpackung ein Inertgas, vorzugsweise Stickstoff, in die mindestens eine Verpackung eingebracht wird.

3. Verfahren nach Anspruch 1, **dadurch gekennzeichnet, dass** in der zweiten Erhitzungs-Einrichtung ein Überdruck und/oder ein Unterdruck vorliegt.

4. Verfahren nach Anspruch 1, **dadurch gekennzeichnet, dass** die mindestens eine Verpackung eine Siegelschicht zum Verschließen derselben aufweist, wobei vorzugsweise die Siegelschicht aus Polypropylen gebildet ist.

5. Verfahren nach Anspruch 1 oder 4, **dadurch gekennzeichnet, dass** die mindestens eine Verpackung eine Barriereschicht aufweist, wobei vorzugsweise die Barriereschicht aus Aluminium gebildet ist.

6. Verfahren nach Anspruch 5, **dadurch gekennzeichnet, dass** die Barriereschicht aus doppelt geglühtem Aluminium gebildet ist.

7. Verfahren nach einem der vorherigen Ansprüche, **dadurch gekennzeichnet, dass** die Verpackung aus mindestens einer Folie (1, 2) gebildet ist.

8. Verfahren nach Anspruch 7, **dadurch gekennzeichnet, dass** die mindestens eine Folie (1, 2) unmittelbar vor dem Schritt d) zu mindestens einem formstabilen Folienkörper, vorzugsweise durch Kaltverformung, zum Verpacken von mindestens einer Gemenge-Portion geformt wird.

9. Nahrungsmittel-Verpackung, umfassend
- mindestens ein Nahrungsmittelprodukt (9), und
- mindestens eine Folie (1, 2), die
-- mindestens einen Aufbewahrungs-Raum (8) umschließt, in dem das mindestens eine Nahrungsmittelprodukt (9) angeordnet ist,
-- mindestens eine Barriereschicht sowie mindestens eine Siegelschicht aufweist, und
-- mindestens eine Verschlussnaht (7) zwischen benachbarten Siegelschichten zum Verschließen der Verpackung aufweist.

10. Nahrungsmittel-Verpackung nach Anspruch 9, **dadurch gekennzeichnet, dass** sich in dem mindestens einen Aufbewahrungs-Raum (8) ein Inertgas, insbesondere Stickstoff, befindet.

11. Nahrungsmittel-Verpackung nach Anspruch 9 oder 10, **dadurch gekennzeichnet, dass** das mindestens eine Nahrungsmittelprodukt (9) eine Frikadelle ist.

12. Nahrungsmittel-Verpackung nach einem der Ansprüche 9 bis 11, **dadurch gekennzeichnet, dass** mindestens eine Folie (2) flexibel ausgebildet ist.

13. Nahrungsmittel-Verpackung nach einem der Ansprüche 9 bis 11, **dadurch gekennzeichnet, dass** mindestens eine Folie (1) als formstabiler Folienkörper ausgebildet ist.

14. Nahrungsmittel-Verpackung nach einem der Ansprüche 9 bis 13, **dadurch gekennzeichnet, dass** die mindestens eine Barriereschicht aus doppelt geglühtem Aluminium gebildet ist.

15. Nahrungsmittel-Verpackung nach einem der Ansprüche 9 bis 14, **dadurch gekennzeichnet, dass** die mindestens eine Siegelschicht bei einer Temperatur von mehr als 135°C sterilisierbar ist.
